# EUROPÄISCHE PATENTANMELDUNG

(11) **EP 0 754 592 A2**
(43) Veröffentlichungstag der Anmeldung: **22.01.1997**
(21) Anmeldenummer: 96108682.4
(22) Anmeldetag: 30.05.1996
(51) Int. Cl.: B60Q 1/076

(54) **Vorrichtung zur Einstellung einer vorgebbaren Beleuchtungsstärke eines Scheinwerfers in Kraftfahrzeugen**

(30) Priorität: 17.07.1995 DE 19525981
(71) Anmelder: Bayerische Motoren Werke Aktiengesellschaft, 80788 München (DE)
(72) Erfinder: Huhn, Wolfgang, 85247 Schwabhausen (DE)

(57) **Zusammenfassung**

Bei einer Vorrichtung zur Einstellung einer vorggebbaren Beleuchtungsstärke eines Scheinwerfers in Kraftfahrzeugen ist der Scheinwerfer mit einer Steuervorrichtung zur Einstellung eines Neigungswinkels des Scheinwerfers versehen und ordnet die Steuervorrichtung jeder vorggebbaren Beleuchtungsstärke einen entsprechenden Neigungswinkel zu.

## Beschreibung

Die Erfindung bezieht sich auf eine Vorrichtung zur Einstellung einer vorgebbaren Beleuchtungsstärke eines Scheinwerfers in Kraftfahrzeugen.

Eine derartige Vorrichtung ist beispielsweise aus der DE 43 08 514 A1 bekannt. Eine Einstellung unterschiedlicher Beleuchtungsstärken eines Scheinwerfers ist beispielsweise in Ländern notwendig, deren gesetzliche Vorschriften bestimmte Beleuchtungsstärken für bestimmte Umweltbedingungen vorgeben. Insbesondere ist in einigen Ländern vorgeschrieben, ein Tagfahrlicht mit reduzierter Beleuchtungsstärke einzuschalten. Zur Reduzierung der Beleuchtungsstärke auf einen vorgegebenen Wert ist beispielsweise aus der DE 43 08 514 A1 bekannt, während des Betriebs der Scheinwerfer ein gepulstes Ein- und Ausschalten der Scheinwerferlampen mit einem vorgegebenen Tastverhältnis (Pulsweitenmodulation) vorzunehmen. Ein derartiges Dimm-Verfahren verkürzt jedoch durch das häufige Ein- und Ausschalten der Lampen deren Lebensdauer. Weiterhin ist bekannt, die Beleuchtungsstärke von Scheinwerfern durch eine niedrigere Versorgungsspannung der Lampen zu reduzieren. Ein derartiges Dimm-Verfahren ist jedoch problematisch, da die Mehrzahl der Scheinwerferlampen empfindlich auf Unterspannung reagieren.

Es ist Aufgabe der Erfindung, eine Einstellung von unterschiedlich vorgebbaren Beleuchtungsstärken eines Scheinwerfers zu ermöglichen, ohne die Scheinwerferlampen bezüglich ihrer optimalen Leuchtweite und ihrer Lebensdauer negativ zu beeinflussen.

Diese Aufgabe wird durch die kennzeichnenden Merkmale des Patentanspruchs gelöst.

Erfindungsgemäß ist der Scheinwerfer mit einer Steuervorrichtung zur Einstellung eines Neigungswinkels des Scheinwerfers versehen. Die Steuervorrichtung ordnet jeder vorgebbaren Beleuchtungsstärke einen entsprechenden Neigungswinkel zu.

Die Erfindung geht von den bereits bekannten Steuervorrichtungen zur Einstellung eines Neigungswinkels des Scheinwerfers zum Erreichen einer erforderlichen Leuchtweite eines Scheinwerfers aus. Bei den bekannten Steuervorrichtungen zur Einstellung eines Neigungswinkels wird insbesondere bei Beladung oder Beschleunigung des Fahrzeugs, d. h. bei sich ändernder Neigung der Karosserie, eine Korrektur der erforderlichen Leuchtweite vorgenommen. Hierzu sind manuell steuerbare und automatisch regelbare Systeme bekannt. Allen Steuervorrichtungen zur Einstellung eines Neigungswinkels des Scheinwerfers ist gemeinsam, daß sie ein elektrisch ansteuerbares Stellglied aufweisen. Dieses ohnehin vorhandene Stellglied wird erfindungsgemäß dazu ausgenützt, um zusätzlich oder ausschließlich einen einer vorgebbaren Beleuchtungsstärke entsprechenden Neigungswinkel einzustellen. Üblicherweise bezieht sich eine vorgegebene Beleuchtungsstärke auf einen definierten Meßpunkt vor den im Kraftfahrzeug eingebauten Scheinwerfern. Bei eingeschalteten Scheinwerfern entsteht auf der vor dem Kraftfahrzeug liegenden Fahrbahn eine ausgeleuchtete Fläche, deren Helligkeit mit zunehmender Entfernung von den Kraftfahrzeugscheinwerfern abnimmt. Der Verlauf der Helligkeit bezogen auf die ausgeleuchtete Fläche hängt jedoch auch vom Neigungswinkel der Scheinwerfer ab. Wird beispielsweise eine definierte reduzierte Beleuchtungsstärke für eine bestimmte Fahrsituation vorgegeben, wird erfindungsgemäß der Neigungswinkel der Scheinwerfer derart vergrößert, daß die vorgegebene Beleuchtungsstärke, insbesondere am definierten Meßpunkt erreicht wird. Dies kann beispielsweise im Sinne einer Steuerung vorgenommen werden, wenn in der Steuervorrichtung eine Tabelle abgespeichert ist, die vorgebbaren Beleuchtungsstärken entsprechende Neigungswinkel zuordnet. Der so bestimmte Neigungswinkel kann jedoch von einem weiteren Neigungswinkel überlagert werden, der beispielsweise eine beladungsabhängige Korrektur der erforderlichen Leuchtweite vorgibt.

Mit dieser Erfindung kann eine vorgegebene Beleuchtungsstärke eines Scheinwerfers eingestellt werden, ohne gleichzeitig die Scheinwerferlampe bezüglich ihrer Lebensdauer und ihrer Lichtstärke zu beeinträchtigen. Ergänzend wird darauf hingewiesen, daß der Begriff 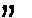 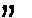 Beleuchtungsstärke" sich nicht auf die Scheinwerferlampe sondern auf eine durch den Scheinwerfer ausgeleuchtete Fläche, z. B. auf die 25 m entfernte, senkrecht zur Scheinwerferfläche stehende ECE-Norm-Meßwand, bezieht.

In der Zeichnung ist ein Ausführungsbeispiel der Erfindung dargestellt. Es zeigt:
- Fig. 1: die übliche Einstellung des Neigungswinkels eines Abblendlicht-Scheinwerfers, insbesondere bei Nachtfahrlicht und
- Fig. 2: eine erfindungsgemäße Einstellung des Neigungswinkels des Abblendlichtscheinwerfers bei einer vorgegebenen reduzierten Beleuchtungsstärke, z. B. aufgrund eines im Fahrzeug vorhandenen eingeschalteten Tagfahrlichtschalters.

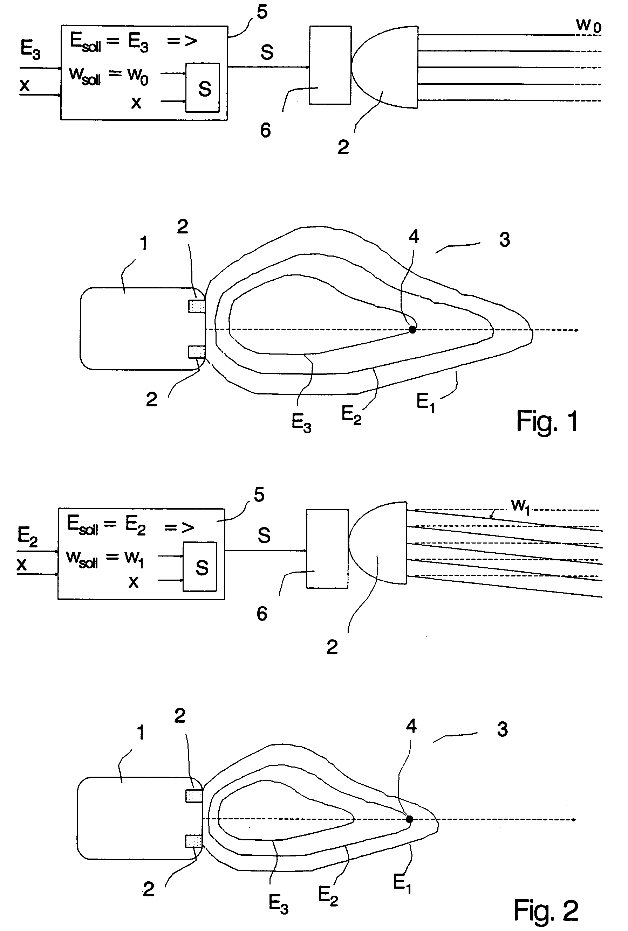

Im unteren Teil der Fig. 1 ist eine Draufsicht auf ein Kraftfahrzeug 1 mit eingebauten Scheinwerfern 2, die im eingeschalteten Zustand die ausgeleuchtete Fläche 3 erzeugen, dargestellt. Die ausgeleuchtete Fläche 3 zeigt Linien gleicher Beleuchtungsstärken E₁, E₂ und E₃. In einem vorgegebenen Abstand zum Fahrzeug 1 ist ein Meßpunkt 4 definiert. In Fig. 1 liegt eine Beleuchtungsstärke E₃ im Meßpunkt 4 vor. Die Beleuchtungsstärke E₃ im Meßpunkt 4 muß beispielsweise vorliegen, wenn ein hier nicht dargestellter Abblendlichtschalter betätigt ist.

Wird beispielsweise der Abblendlichtschalter (hier nicht dargestellt) betätigt, erhält die Steuervorrichtung 5 für die Ansteuerung des Stellglieds 6 zur Verstellung des Scheinwerfers 2 ein Eingangssignal, das der Steuervorrichtung 5 die Beleuchtungsstärke E₃ als Soll-Beleuchtungsstärke Eₛₒₗₗ vorgibt. Es ist möglich, an die Steuervorrichtung 5 noch weitere Eingangssignale x heranzuführen. Die Steuervorrichtung 5 ordnet der vorgegebenen Beleuchtungsstärke E₃ einen Soll-Neigungswinkel wₛₒₗₗ mit dem Wert w₀ zu. Weiterhin verarbeitet die Steuervorrichtung 5 den vorgegebenen Soll-Neigungswinkel w₀, ggf. zusammen mit einem weiteren Soll-Neigungswinkel, der sich aus dem Eingangssignal x ergibt, zu einem Steuersignal S. Das Steuersignal S wird von der Steuervorrichtung 5 an das elektrische Stellglied 6, z. B. einen elektrischen Schrittmotor, weitergegeben. Mittels des Stellglieds 6 wird der Scheinwerfer 2, der im oberen Teil der Fig. 1 in der Seitenansicht dargestellt ist, entsprechend dem vorgegebenen Soll-Neigungswinkel w₀ eingestellt.

In Fig. 2 erhält die Steuervorrichtung 5 als Eingangssignal die vorgegebene Beleuchtungsstärke E₂, die gegenüber der Beleuchtungsstärke E₃ geringer ist. Das Eingangssignal E₂ ergibt sich beispielsweise durch die Betätigung eines Schalters 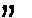 Tagfahrlicht". Dieser vorgegebenen Beleuchtungsstärke E₂ wird der entsprechende Soll-Neigungswinkel wₛₒₗₗ mit dem Wert w₁ zugeordnet. In Abhängigkeit von dem Soll-Neigungswinkel w₁ wird, wie in Fig. 1 bereits beschrieben, wieder ein Steuersignal S gebildet, das von der Steuervorrichtung 5 an das Stellglied 6 weitergegeben wird. In Fig. 2 wird der Scheinwerfer 2 gegenüber dem Neigungswinkel w₀ in Fig. 1 entsprechend dem Neigungswinkel w₁ stärker nach unten in Richtung Fahrbahn geneigt.

Aus dem Neigungswinkel w₁ ergibt sich die im unteren Teil der Fig. 2 dargestellte ausgeleuchtete Fläche 3, die gegenüber der in Fig. 1 dargestellten ausgeleuchteten Fläche 3 insgesamt verkleinert ist. Im Meßpunkt 4 befindet sich nunmehr die gegenüber der Beleuchtungsstärke E₃ reduzierte Beleuchtungsstärke E₂.

Mit diesem erfindungsgemäßen Ausführungsbeispiel sind Zusatzanforderungen an die Scheinwerferfunktionen, wie z. B. die Forderung des Tagfahrlichts in verschiedenen Ländern, sowohl ohne Zusatzscheinwerfer als auch ohne Lebensdauerbeeinträchtigung der Scheinwerferlampen erfüllbar.

## Patentansprüche

1. Vorrichtung zur Einstellung einer vorggebbaren Beleuchtungsstärke eines Scheinwerfers in Kraftfahrzeugen, dadurch gekennzeichnet, daß der Scheinwerfer (2) mit einer Steuervorrichtung (5) zur Einstellung eines Neigungswinkels (w) des Scheinwerfers (2) versehen ist und die Steuervorrichtung (5) jeder vorggebbaren Beleuchtungsstärke (E₃; E₂) einen entsprechenden Neigungswinkel (w₀; w₁) zuordnet.
